Europäisches Patentamt

European Patent Office

Office européen des brevets

(11) Publication number: **0 214 835**
**A2**

# (12) EUROPEAN PATENT APPLICATION

(21) Application number: **86306804.5**

(22) Date of filing: **03.09.86**

(51) Int. Cl.⁴: **F 16 L 11/02**

(30) Priority: **10.09.85 GB 8522414**

(43) Date of publication of application:
**18.03.87 Bulletin 87/12**

(84) Designated Contracting States:
**AT BE CH DE FR GB IT LI LU NL SE**

(71) Applicant: **ANGUS FIRE ARMOUR LIMITED**
**Bentham**
**Lancaster LA2 7NA(GB)**

(72) Inventor: **Sheard, Dennis Richard**
**Brackenber House Brackenber Lane Giggleswick**
**Settle North Yorkshire BD24 OEB(GB)**

(74) Representative: **Brooke-Smith, Fred**
**STEVENS, HEWLETT & PERKINS 5 Quality Court**
**Chancery Lane**
**London WC2A 1HZ(GB)**

(54) Improvements relating to tubular woven fabrics and hoses incorporating such fabrics.

(57) A hose formed from elastomeric material incorporates a reinforcing tubular fabric woven from groups of warp threads and groups of helical weft threads at least one of which groups of threads does not appear at at least one surface of the fabric. The warp and weft threads may be bound together by binder threads and are arranged to extend parallel to or at only a small angle of inclination to the surfaces of the fabric.

EP 0 214 835 A2

# IMPROVEMENTS RELATING TO TUBULAR WOVEN FABRICS AND
## HOSES INCORPORATING SUCH FABRICS

This invention relates to tubular woven fabrics and hoses incorporating such fabrics.

According to one aspect of the invention there is provided a tubular fabric woven from groups of helically extending weft yarns and lengthwise extending warp yarns, the yarns of at least one of which groups do not appear at at least one surface of the fabric.

In another aspect the invention provides a tubular fabric having at least two woven plies and having woven therein at least one group of yarns which do not appear at at least one surface of the fabric.

Thus either or both of the warp and weft yarns of these tubular fabrics are arranged in groups of yarns and the yarns of at least one of these groups do not appear at at least one surface of the fabric. Thus in one such tubular fabric, there are three groups of warp yarns the yarns of the first and second of which groups are permanently at opposite surfaces respectively of the fabric and the yarns of the third group appearing at neither surface of the fabric, and two groups of helical weft yarns, the yarns of one of these groups being interwoven with the yarns of said first and third groups and the yarns of the other group of weft yarns being interwoven with the yarns of said second and third groups. In this tubular fabric, the yarns of said third group of warp yarns appear at neither surface of the fabric, and the yarns of the two groups of weft yarns appear each at only one surface of the fabric.

The invention further provides a hose incorporating as reinforcement tubular fabric as set out in either of the preceding paragraphs. Such hoses may comprise an impervious, e.g. rubber elastomeric or plastics, lining inserted into a textile tube and bonded to it by an adhesive. The textile tube may be impregnated with rubber, elastomer or plastics or may be coated from outside by application of solutions, dispersions or paints. The hoses are preferably, but not necessarily of flexible cross-section, e.g. lay-flat hoses.

In still another aspect the invention provides a hose extruded from a rubber or plastics material and incorporating as reinforcement a tubular fabric woven from groups of helically extending weft yarns and lengthwise extending warp yarns, the yarns of at least one of which groups do not appear at at least one surface of the fabric, said fabric being embedded in and impregnated by said material.

In seeking to increase the strength, e.g. the bursting strength or the tensile strength, of a hose the number and/or size of the yarns can be increased but there is a limit when the yarns are so tightly packed that no further yarns can be incorporated.

Another method of increasing the tensile and/or bursting strength involves using yarns having higher tensile strength. However, problems arise in using such yarns, since high tensile strength in yarns is associated with low extensibility at break. A direct consequence of this is that these yarns when inserted into a fabric by a weaving operation must be woven in very evenly, i.e. the length of yarns woven into unit length of fabric must be equal, since failure to achieve this results in the tendency for the shorter yarns to be stretched to breaking point before the longer yarns are subjected to any substantial proportion of the load applied to the fabric, i.e. poor conversion efficiency of yarn strength to fabric strength.

We have found that the tubular fabrics according to the invention enable yarns of high modulus and strength and low extensibility to be used effectively by reducing the amplitude of the crimp of the yarn weaving between transverse yarns in the fabric so that the lay of the yarns in the fabric is more nearly straight. These fabrics thus provide high-strength conversion efficiency from yarns to the finished fabric. The maximum angle of the yarns weaving between transverse yarns should be as low as possible relative to the surface of the fabric, since a high angle itself results in low strength conversion efficiency. By choosing an appropriate weaving construction, it is possible to weave high-tensile strength yarns into the fabric with reduced crimp amplitude and crimp angle, and with decreased crimp frequency, and thus to provide higher conversion efficiency from yarn strength to fabric strength and to hose strength. Tubular fabrics and hoses incorporating these forms of construction have also been found to exhibit reduced longitudinal extension and radial swell when subjected to tension and internal pressure.

The use of tubular reinforcing fabrics formed in two or more plies allows hoses of improved properties in other respects to be manufactured. Thus, for example, tubular jackets for use in hoses may have inner yarn layers comprising high strength yarns which will provide all the mechanical, hydraulic and tensile properties required, while the yarns comprising the outer surface of the jacket are selected to provide abrasion resistance, heat resistance or similar secondary properties. Where the fabric incorporates threads which do not appear at either surface of the fabric, these threads may for example be of wire, to conduct away static electricity generated in fuel hoses, or to conduct electric signals or communications. In other examples these threads may comprise high-strength brittle yarns, such as glass, carbon fibre or aramide, which can be safely used only because of the protection provided by the yarns in the plies on either side of it.

One important method of manufacturing a hose is described in British Patent Specification No.856995 (de Laubarede) and involves extruding a rubber or plastics material about a tubular fabric, the material passing through the fabric so that the fabric is embedded in the material, which is thus also disposed in the interstices between the yarns. If the yarns are tightly packed the material may be unable to pass through the yarns and manufacture of the hose by this method becomes impracticable. As the limits of this method are approached, the close packing of the yarns renders the fabric tube and the resulting hose stiff and inflexible.

By using instead a tubular fabric in which the yarns are arranged in two or more plies, wider interstices are provided for the passage of the rubber or plastics material through the fabric and the hose can be made more flexible by reason of the looser packing of the yarns.

In the accompanying drawings:

Figure 1 shows a hose of the lay-flat type in a partly-expanded condition incorporating or reinforcing tubular fabric according to the invention and

Figures 2 to 6 show part-circumferential sections of some tubular fabrics which can be employed as the reinforcing tubular fabric in the hose of Figure 1 and which having various weaves.

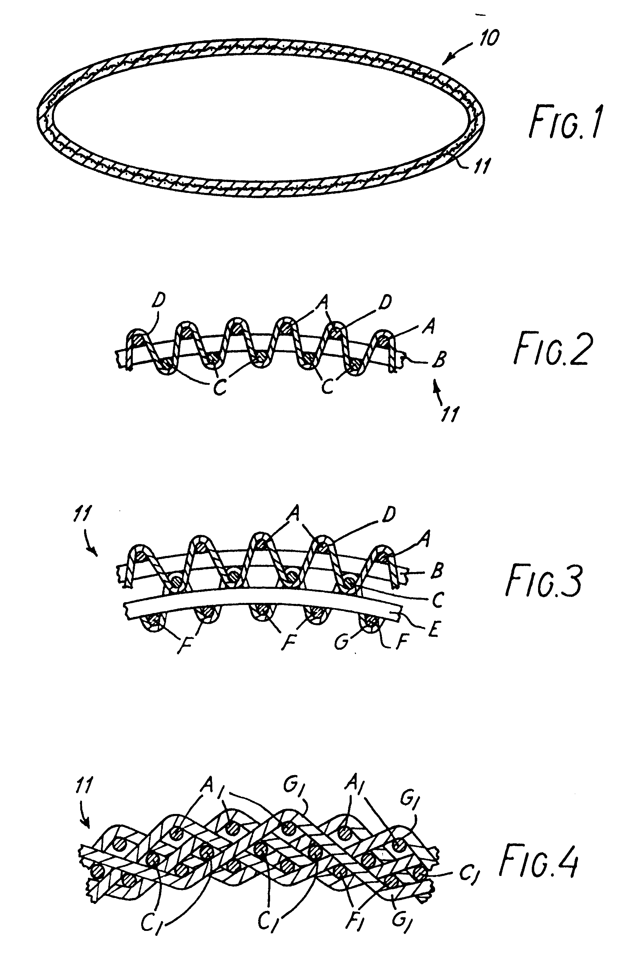

Referring first to Figure 1, the hose 10 is of the so-called lay-flat type and is made from elastomeric material in which a tubular reinforcing fabric is embedded, the elastomerics material extending into the interstices of the tubular fabric.

Figure 2 shows one form of the tubular fabric 11 having an outer layer of warp threads A, an inner layer of warp threads C, a layer of weft threads B between – the threads A and C, and binder threads D extending the weft direction. In this construction threads A do not appear at the inner surface of the fabric and threads C do not appear at the outer surface.

Figure 3 shows a modification of the fabric 11 of Figure 2 in which a second layer of weft threads E and a third layer of warp threads F are added and are bound in by binder threads G extending in the weft direction and serving to bind threads E and F to warp threads C. In this construction, threads A and F appear each at only one surface of the fabric and threads C do not appear at either surface.

Figure 4 shows a form of the tubular fabric 11 having three warp layers of threads $A_1$, $C_1$ and $F_1$ bound together by common weft binders $G_1$. In this construction, warp threads $A_1$ and $F_1$ appear each at only one face of the fabric and threads $C_1$ do not appear at either surface.

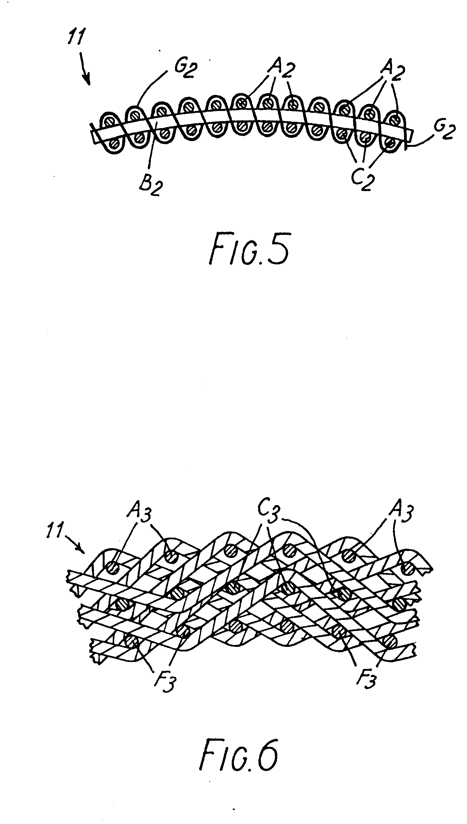

Figure 5 shows a tubular fabric having two warp thread layers $A_2$ and $C_2$ and one weft thread layer $B_2$ bound together by a binder $G_2$ extending in the weft direction. Thus the warp layers $A_2$ and $C_2$ are seen each at only one surface of the fabric and weft layer $B_2$ is seen at neither surface.

Figure 6 shows a tubular fabric having three layers of warp threads $A_3$, $C_3$ and $F_3$ woven together by sets of weft threads K and L. In this construction warp threads $A_3$ and $F_3$ and weft threads K and L all appear at only one surface of the fabric, and warp threads $C_3$ appear at neither surface.

CLAIMS

1. A tubular fabric woven from groups of helically extending weft yarns and lengthwise extending warp yarns, the yarns of at least one of which groups do not appear at at least one surface of the fabric.

2. A tubular fabric having at least two woven plies and having woven therein at least one group of yarns which do not appear at at least one surface of the fabric.

3. A hose made from elastomeric material and incorporating a reinforcing tubular fabric characterised in that said fabric is woven from groups of helically extending weft yarns and lengthwise extending warp yarns, the yarns of at least one of which groups do not appear at at least one surface of the fabric.

4. A hose made from elastomeric material and incorporating a reinforcing tubular fabric characterised in that said fabric has at least two woven plies and has woven therein at least one group of yarns which do not appear at at least one surface of the fabric.

5. A hose as claimed in claim 3 or claim 4, wherein the hose is of the lay-flat type.

6. A hose as claimed in any one of claims 3 to 5, wherein the yarns of a said group which do not appear at one surface of the fabric do not appear at either surface of the fabric and are made from a material selected from the groups consisting of wire, glass, carbon fibre, and aramide.

FIG.1

FIG.2

FIG.3

FIG.4

0214835

11

$G_2$   $A_2$   $A_2$

$B_2$   $C_2$   $G_2$

FIG.5

$A_3$   $C_3$   $A_3$

11

$F_3$   $F_3$

FIG.6